# EUROPÄISCHE PATENTANMELDUNG

(11) **EP 1 798 702 A2**
(43) Veröffentlichungstag der Anmeldung: **20.06.2007**
(21) Anmeldenummer: 06024882.0
(22) Anmeldetag: 01.12.2006
(51) Int. Cl.: G09B 17/00

(54) **Leselernwickler mit streifenförmigem Lehrmaterial**

(30) Priorität: 17.12.2005 DE 102005060575
(71) Anmelder: Hartlaub, Christine, 63843 Niedernberg (DE)
(72) Erfinder: Hartlaub, Christine, 63843 Niedernberg (DE)
(74) Vertreter: Pöhner, Wilfried Anton, Dr.

(57) **Zusammenfassung**

Leselernwickler, bestehend aus einem Gehäuse, in welchem Rollen drehbar gelagert sind und einem Streifen mit darauf aufgebrachten Lerninformationen, welcher zu einem Teil an der Außenseite des Gehäuses sichtbar ist und durch Drehung der Rollen verschiebbar ist, wobei je ein Paar der Rollen bevorzugt parallel und gegenüberstehend angeordnet ist und auf der einen Rolle der Streifen aufgewickelt ist, der davon abwickelbar und auf die andere Rolle aufwickelbar ist, wobei entweder der zwischen den beiden Rollen verlaufende Bereich des Streifens durch eine Öffnung im Gehäuse sichtbar ist oder der Streifen durch zwei Schlitze aus dem Gehäuse aus- und wieder eintritt, welche bevorzugt zu den Drehachsen der Rollen parallel ausgerichtet sind, und auf den Drehachsen je eine Kurbel außerhalb des Gehäuses angeordnet ist und/oder ein scheibenförmiger Bereich der Rollen teilweise durch wenigstens je einen Schlitz aus dem Gehäuse herausragt, wobei jeder Schlitz senkrecht zu den Drehachsen ausgerichtet ist und/oder ein Antrieb auf der Drehachse der aufwickelnden Rolle angeordnet ist.

## Beschreibung

Die Erfindung bezieht sich auf einen Leselernwickler, bestehend aus einem Gehäuse, in welchem Rollen drehbar gelagert sind und einem Streifen mit darauf aufgebrachten Lerninformationen, welcher zu einem Teil an der Außenseite des Gehäuses sichtbar ist und durch Drehung der Rollen verschiebbar ist.

In der wissensorientierte Gesellschaft des 21. Jahrhunderts nimmt das Lernen eine zunehmend wichtigere Funktion ein und ist für den modernen Menschen von existentieller Bedeutung. Auch lernschwache Menschen können diesem Zwang nicht entfliehen.

Der Lernvorgang im menschlichen Gehirn besteht aus dem wiederholten Aufnehmen von Informationen. Es ist mittlerweile bekannt, dass im menschlichen Gehirn mit jeder Wiederholung einer Informationseingabe die zur Speicherung aufgebaute Struktur immer stabiler wird, was unter einem entsprechend stark vergrößernden Mikroskop gegenständlich sichtbar wird. Dazu ist es erforderlich, dass sich der Lernende eine exakt gleiche Information immer wieder zukommen lässt und an derselben Stelle des Gehirns speichert. Dabei darf diese Information nicht mit anderen vermischt oder verwässert werden. Genau dieses Problem tritt jedoch durch die mangelhaften Konzentrationsfähigkeit von lernschwachen Menschen auf.

Deshalb gibt es zahlreiche Einrichtungen und Hilfsmittel, welche dem Lernenden einen eng abgegrenzten Informationsumfang genau reproduzierbar wieder zukommen lassen. Dabei wird die Lernfähigkeit dadurch erhöht, dass neben der optischen Wahrnehmung auch taktile und haptische Effekte die Konzentration unterstützen. Gemäß dem aktuellen Stand der Technik sind dazu neben Büchern und Bildschirmen verschiedene andere, mechanische Einrichtungen bekannt. Sie haben gemeinsam, dass eine Information in grafischer Darstellung, also als Bild oder als Text, vorhanden ist und nur zu einem ganz bestimmten Teil sichtbar gemacht wird. Dazu werden Tafeln mit einem darüber angeordneten Rahmen oder aneinander reihbare Würfel beschrieben.

DE 8435698 beschreibt einen Lernrollenkasten. In diesem Kasten sind mehrere Rollen auf einer gemeinsamen Achse nebeneinander angeordnet. Sie ragen zu einem Teil des Umfanges aus dem Kasten heraus. Ein kleiner Teil einer jeden Rolle ist durch ein zum Lernenden weisendes Sichtfenster erkennbar. Auf dem Umfang einer jeden zylindrischen Rolle sind die zu erlernenden Zusammenhänge grafisch aufgetragen. Weitere Lerneffekte sind dadurch möglich, dass mehrere Rollen miteinander kombiniert werden.

Ein wesentlicher Nachteil dieser Anordnung ist, dass die Umfangsfläche jeder Rolle nur eine sehr begrenzte Informationsmenge aufnehmen kann. Außerdem wird durch die Krümmung der Fläche die Anzahl der gleichzeitig sichtbaren Informationen prinzipiell begrenzt. Eine Vergrößerung der Informationsmenge ist durch Hinzufügen einer weiteren Rolle oder durch Vergrößern des Durchmessers möglich. Beide Möglichkeiten haben jedoch den Nachteil, dass die Einrichtung deutlich größer, schwerer und daher auch teurer wird.

Um diese Probleme ganz deutlich zu reduzieren hat, sich die Erfindung die Aufgabe gestellt, ein Leselerngerät zu schaffen, das aus einer vergleichsweise großen Informationsmenge einen sehr kleinen Teil abrufbar macht, wobei der Lernende durch ganz einfache Bedienvorgänge das Lerntempo und/oder die Lernmenge bestimmen kann.

Ausgehend von einem Streifen, auf welchem die Lerninformation aufgebracht sind und einem Gehäuse, in dem zwei Rollen drehbar gelagert sind, schlägt die Erfindung als Lösung vor, dass je ein Paar der Rollen bevorzugt parallel und gegenüberstehend angeordnet ist und auf der einen Rolle der Streifen aufgewickelt ist, der davon abwickelbar und auf die andere Rolle aufwickelbar ist, wobei entweder der zwischen den beiden Rollen verlaufende Bereich des Streifens durch eine Öffnung im Gehäuse sichtbar ist oder der Streifen durch zwei Schlitze aus dem Gehäuse aus- und wieder eintritt, welche bevorzugt zu den Drehachsen der Rollen parallel ausgerichtet sind, und auf den Drehachsen je eine Kurbel außerhalb des Gehäuses angeordnet ist und/oder ein scheibenförmiger Bereich der Rollen teilweise durch wenigstens je einen Schlitz aus dem Gehäuse herausragt, wobei jeder Schlitz senkrecht zu den Drehachsen ausgerichtet ist und/oder ein Antrieb auf der Drehachse der aufwickelnden Rolle angeordnet ist.

Bei dieser Lösung werden die beiden Rollen nur durch den Streifen miteinander verbunden. Der Lernende dreht eine Rolle entweder durch eine Kurbel auf der Achse oder durch eine scheibenförmige Verbreiterung der Rolle. Dadurch übt er ein Drehmoment auf die Rolle aus. Mit diesem Drehmoment entsteht eine Kraft im Streifen die an der anderen Rolle angreift und auch diese in Bewegung setzt. Der Streifen muss so stark dimensioniert sein, dass die durch Reibung und durch Beschleunigung des Massenträgheitsmomentes der abzuwickelnden Rolle generierten Gegenkräfte übertragen werden können.

Dabei kann es subjektiv durchaus sinnvoll sein, die Lagerung der Rolle so auszuführen, dass ein bestimmtes Losbrechdrehmoment überwunden werden muss, um die Rolle in Bewegung zu setzen. Dadurch wird zum einen der abgezogene Streifen straff gehalten und zum anderen das haptische Erlebnis des Starten und Bewegens verstärkt. Gemäß dieser Überlegung ist eine Gleitlagerung zu bevorzugen. Sie bietet gegenüber aufwendigen Rillenkugellagern Kostenvorteile.

Ein prinzipieller Vorteil eines erfindungsgemäßen Leselernwicklers ist, dass der Abstand zwischen den Drehachsen ein frei wählbarer Parameter ist. Dadurch kann im Vergleich zu den anderen, bisher bekannten Lösungen die maximale Länge der zu gleicher Zeit sichtbaren Informationen frei gewählt werden. Das erfindungsgemäße Prinzip lässt es zu, dass aus dieser großen Länge ein Teilbereich selektiert wird, indem Klappen oder Schieber für eine partielle Abdeckung sorgen.

Die Erfindung schlägt zwei Varianten der Führung des sichtbaren Bereiches des Streifens vor. Die einfachste Lösung ist es, im Gehäuse eine Öffnung vorzusehen, durch welche hindurch der Bereich des Streifens zwischen den beiden Rollen sichtbar wird. Vorteil dieser Lösung ist, dass der Streifen ungehindert und ohne zusätzliche Bremsung umgewickelt werden kann. Auch bei der Herstellung der Öffnung ist nur eine sehr begrenzte Genauigkeit erforderlich. Der Nachteil dieses Prinzips ist, dass in Abhängigkeit von dem Durchmesser der Wickel auf den beiden Rollen der Abstand des sichtbaren Bereiches von der Öffnung variiert. Nur wenn die abzuwickelnde Rolle und die bereits aufgewickelte Rolle den gleichen Durchmesser aufweisen, verläuft der sichtbare Bereich des Streifens parallel zur Öffnung; in allen anderen Betriebszuständen ist er schräg zur Öffnung ausgerichtet.

Dieser prinzipielle Nachteil kann in einer zweiten Variante dadurch vermieden werden, dass der Streifen durch je einen Schlitz aus dem Gehäuse heraus und wieder hinein geführt wird. An der Austritts- und der Eintrittsstelle wird der Streifen umgelenkt. Die einfachste Variante dafür ist - ähnlich der Lagerung der Rolle - eine Gleitlagerung. Je nach Material des Gehäuses wird dadurch eine zusätzliche Bearbeitung der Gleitfläche und insbesondere des Umlenkbereiches erforderlich. Zusätzlich ist der Verschleiß des Gleitbereiches und der Rückseite des Streifens zu überprüfen und erforderlichenfalls durch eine Beschichtung mit reibungs- und verschleißbeständigerem, jedoch flexiblem Material zu kompensieren.

Ein funktioneller Vorteil dieser Gleitstrecke ist, dass sie als Bremse dimensioniert werden kann. Ein Vorteil der Gleitbremsung des Streifens im Vergleich mit einer Bremsung der Achse der abzuwickelnden Rolle ist, dass die Bremsung des Streifens unabhängig vom momentanen Durchmesser der abzuwickelnden Rolle für eine konstante Bremskraft sorgt.

Als Alternative für die Umlenkung des Streifens an der Austritts- und Eintrittsstelle schlägt die Erfindung Umlenkrollen vor. Damit wird der Verschleiß vor allem am Streifen, aber auch am Gehäuse reduziert. Wenn die Rollen so angeordnet werden, dass sie über die Außenfläche des Gehäuses hinausragen, entfällt eine Gleitreibung zwischen Streifen und Gehäuseaußenseite.

Eine weitere, prinzipbedingte Eigenschaft eines Umwicklers ist, dass mit zunehmender Anforderung an die Genauigkeit, mit der der Streifen aufgewickelt wird, auch die Anforderungen an die Toleranz der Ausrichtung zwischen den beiden Drehachsen wachsen. Abweichungen führen dazu, dass der Streifen beim Aufwickeln aus dem mittleren Bereich der Rolle an einen Rand wandert und dort je nach Konstruktion der Rolle entweder über den Rand hinaus weiter wandert und an den Rand der Schlitze im Gehäuse oder den Bereich des Gehäuses in der Nähe der Rolle stößt. Falls die Rolle einen Randbereich mit erheblich größerem Durchmesser als dem Kern der Rolle aufweist, wird bei nicht korrekt ausgerichteten Rollenpaaren der Streifen an diesem Randbereich anstoßen, was zu einem unsauberen Wickel und zu Verschleiß am Rand des Streifens und an dem Randbereich der Rolle führt. Als Abhilfemaßnahme schlägt die Erfindung vor, dass in einer alternativen Ausführung eine Drehachse an einem Ende verschwenkbar gelagert ist und am anderen Ende das Drehlager durch eine Schraube in radialer Richtung parallel zur Verbindungslinie zwischen den beiden Drehachsen verschiebbar ist. Damit können Fertigungs- und Montagetoleranzen durch Verdrehen der Schraube korrigiert werden und eine sehr genaue Ausrichtung der Drehachsen von beiden Rollen erreicht werden.

Ein erfindungsgemäßer Leselernwickler weist gegenüber den bisher bekannt gewordenen Lösungen zahlreiche Vorteile auf. Wie bereits erwähnt, ist durch die Wahl des Abstandes zwischen den beiden Rollen und/oder durch die Wahl des Abstandes zwischen den beiden Schlitzen zur Führung des Streifens auf die Außenseite des Gehäuses die Länge des sichtbaren Bereiches vom Streifen beliebig wählbar. Denkbar ist es, dass gleiche Streifen in verschiedenen Gehäusen eingesetzt werden und dadurch verschiedene "Leselängen" ermöglicht werden. Als vorteilhafte Variante ist es denkbar, dass die Leselänge vom Benutzer einstellbar ist, wozu vorteilhafter Weise zwei Stück Umlenkrollen eingesetzt werden, von denen wenigstens eine parallel zur Leseoberfläche verschiebbar ist.

Vorteilhaft ist, dass eine Rolle nicht zwangsläufig mit einem Streifen der maximal möglichen Länge bestückt werden muss. Vielmehr ist ein sinnvoller Betrieb auch mit einem erheblich kürzeren Streifen möglich. Dadurch kann die Streifenlänge stufenlos der Menge des Lehrmateriales angepasst werden. Das ist bei Lernhilfeeinrichtungen mit einer fest bestimmten Geometrie nur dadurch möglich, dass ein Teil der belegbaren Fläche leer bleibt, was für den Lernenden unelegant und ablenkend wirkt und die Herstellungskosten nutzloser Weise auf der gleichen Höhe wie bei voller Ausnutzung hält.

In einer weiteren, vorteilhaften Ausführungsvariante eines erfindungsgemäßen Leselernwicklers ist es möglich und sinnvoll zwei oder mehr Streifen parallel zueinander anzuordnen. In einer dem Fachmann wohlvertrauten Betriebsart ist es dann möglich, Informationen von mehreren Streifen durch gleichzeitige Sichtbarmachung zusammen zu führen. Beispiele sind, dass auf einem Streifen zeichnerische Darstellungen wiedergegeben werden und auf dem anderen Streifen ein die Darstellung beschreibendes Wort. Auf einem dritten Streifen könnte dieses Wort in einer anderen Sprache aufgebracht sein. Eine weitere Nutzungsmöglichkeit ist ein Streifen mit Buchstaben und ein zweiter Streifen mit Worten, welche diese Buchstaben verwenden. Nach ähnlichem Prinzip ist die Zuordnung von Begriffen eines bestimmten Bereiches möglich, wie zum Beispiel die zueinanderpassenden Begriffe "See" und "Boot" aus denen dann der Begriff "Baum" als nicht passend herausfallen würde. Generell ist die Übertragung von Prüfungs- und Lernfragen auf einen erfindungsgemäßen Leselernwickler mit zwei paar Rollen möglich, wenn diese Fragen nach dem sogenannten "multiple choice Verfahren" aufgebaut sind, also einer Frage, zu deren Beantwortung eine begrenzte Anzahl von fest formulierten Antworten vorhanden sind, zwischen denen der Prüfling oder der Lernende auszuwählen hat.

Als eine weitere interessante Nutzungvariante ist denkbar, dass bei einem mehrstreifigen Leselernwickler ein Streifen leere Felder enthält, die als Antwortfeld zu bestimmten Fragefeldern gekennzeichnet sind, jedoch zum größten Teil freigelassen sind und für die Beschriftung durch den Lernenden gedacht sind.

Als eine weitere Ausführungsform der vorgenannter Variante bietet sich die Nutzung eines Leselernwicklers zur Auswertung der von einem Prüfling beschrifteten Antwortstreifen an. Dazu wird ein zweiter Streifen benötigt, auf welchem die zu jeder Frag gehörenden richtigen Antworten aufgebracht sind und zwar idealer Weise derart, dass die Fragen in exakt gleiche Reihenfolge und exakt gleichem Abstand zueinander auf dem Streifen angeordnet sind, wie beim fast leeren Band für den Prüfling. Wenn eine Markierung zur Synchronisation von Frage und Antwortband vorhanden ist, dann können beide Bänder in einen Leselernwickler eingespannt werden und mit gleicher Umfangsgeschwindigkeit abgewickelt werden. Alternativ können beide Streifen auch auf einer einzigen Rolle in synchronisierter Position zueinander aufgewickelt und zur Ermittlung des Prüfungsergebnisses abgerollt werden. Der Prüfer sieht im Fenster bzw. auf der Lesefläche dann nacheinander jede gestellte Frage mit der vom Prüfling eingetragenen Antwort.

Als weitere interessante Variante eines erfindungsgemäßen Leselernwicklers schlägt die Erfindung vor, dass beide Seiten des Streifens zum Aufbringen von Information genutzt werden. Dazu ist erforderlich, dass entweder die Rollen herausnehmbar und nach einer Drehung von 180 Grad wieder einsetzbar sind oder in einer einfachen Variante, eine zweite Öffnung auf der zu der ersten Öffnung gegenüberliegenden Seite des Gehäuses eingebracht wird. Eine Untervariante ist es, die auf den beiden Seiten aufgebrachten Informationen beim Druck oder beim Auftragen zu synchronisieren, sodass auf den beiden Seiten bestimmte Informationspaarungen entstehen. In dieser Ausführungsform ist ein erfindungsgemäßer Leselernwickler zur Nutzung durch zwei Personen geeignet, die zum Beispiel partnerschaftlich je nach den Informationen des Streifens miteinander reagieren können. Oder es wird ein Streifen mit Fragen und richtigen Antworten auf der einen Seite und auszuwählenden Antworten auf der anderen Seite eingelegt. In dieser Variante ist der Leselernwickler als Lehr- und/oder Prüfgerät zur Verwendung von einem Lehrer und einem Schüler einsetzbar.

Eine sehr sinnvolle Variante ist es, dass wenigstens eine Rolle aus dem Leselernwickler herausnehmbar ist. Sie kann gegen eine andere Rolle ausgetauscht werden, auf der ein Streifen mit einem anderen Lerninhalt aufgewickelt ist.

Wenn beide Rollen herausnehmbar sind und in der jeweils anderen Position des Gehäuses wieder einsetzbar ist, und wenn auf der anderen Seite des Streifens eine weitere zu erlernende Information - zum Beispiel in Form eines Textes - aufgebracht ist, dann kann ohne einen Rückspulvorgang sondern nur durch Umstecken der beiden Rollen sofort ein weiterer Lernzyklus begonnen werden.

Das Prinzip des Leselernwicklers lässt verschiedene Verfahren für das Einbringen und das Befestigen eines Lernstreifens zu: Für den Benutzer sicher am einfachsten ist es, wenn er eine Kassette mit zwei darin drehbar gelagerten Rollen und auf einer Rolle aufgewickelten Streifen als komplette Einheit in das Gehäuse 1 absenken kann. Diese Variante ist jedoch sehr aufwendig in der Herstellung und die Benutzerfreundlichkeit ist nur dann wirklich hoch, wenn der Leselernwickler in der Variante mit einem seitlichen Fenster zur Sichtbarmachung des Streifens eingesetzt wird.

Eine Alternative zum Einlegen eines neuen Streifens ist eine Gerätevariante, bei der die jeweils leere Spule wiederverwendet wird und die neuen Lehrinhalte auf einem Streifen aufgebracht sind, welcher um die neu einzusetzende Rolle herum aufgewickelt ist. In dieser Variante muss der Benutzer dafür sorgen, dass er das freie Ende des Streifens auf der Achse der freien Trommel befestigt. Dazu schlägt die Erfindung entweder einen Klettverschluss oder einen Haken auf der Drehachse vor. Der Vorteil des Klettverschlusses ist, dass er in jeder beliebigen Winkelstellung mit dem Streifen verbindbar ist.

Ein Haken auf der Drehachse, welcher in eine entsprechende Öffnung des Streifens passt, ist vergleichsweise kostengünstiger, erfordert an der Einhängestelle jedoch ein entweder sehr stabiles Streifenmaterial oder eine Verstärkung des Streifens in diesem Bereich. Falls beide Drehrichtungen zum Aufwickeln genutzt werden sollen, ist die Anbringung von zwei Haken mit jeweils entgegengesetzter Ausrichtung erforderlich.

In einer weiteren, spektakulären Variante kann der sichtbare Bereich des Streifens hinterleuchtet werden, wozu der Streifen sinnvoller Weise aus einem zumindest halbtransparenten Material bestehen sollte. Diese Funktionalität lässt sich als Beleuchtung des Streifens nutzen, eine andere Funktionalität ist es, dass an bestimmten, vom Lernprogramm vorgegebenen Stellen, die Lichtquelle aufleuchtet.

Dies kann zum Beispiel nach einer Wiederholung einer immer gleichen Anzahl von Lernschritten der Fall sein oder an bestimmten, gekennzeichneten Positionen des Streifens.

Zur Kennzeichnung dieser Abschnitte sind zum Beispiel auf den Streifen aufgebrachte Markierungen einsetzbar. Zu deren Auswertung wird eine Leseeinrichtung benötigt, welche gemäß heutigem Stand der Technik bevorzugt elektronisch aufgebaut ist. Eine weniger komplizierte Variante ist es, dass als Markierung eine Öffnung dient. Diese Öffnung kann zum Beispiel einen durch Federkraft belasteten Stift oder einen elektrischen Kontakt freigeben, wodurch zusätzliche Funktionen auslösbar sind.

Als weitere Funktionalität ist unter anderem eine Lichtquelle und/oder eine Geräuschquelle und/oder eine Sperrung oder eine Freigabe eines weiteren Rollenpaares und/oder der Zugang zu einem Ablagefach im Gehäuse denkbar und in Verbindung mit dem vorerwähnten Auslösesignal aktivierbar. Diese zusätzliche Funktionalität kann zum Beispiel als Belohnung für die bisher geleistete Lernarbeit genutzt werden. Durch die Funktion der Sperrung oder Freigabe eines weiteren Rollenpaares ist eine didaktische Verzweigung symbolisierbar. Eine weitere Alternative für die Nutzung von Öffnungen im Streifen ist, dass die Öffnung so groß ist, dass der Lernende mit dem Finger durch die Öffnung hindurch an gewissen Stellen die Möglichkeit zur Aktivierung einer Funktion hat oder - nach eigener Entscheidung - das auch unterlassen kann. Es wäre zum Beispiel denkbar, an bestimmten Stellen durch diese Öffnung die Freigabe zum Weiterdrehen des benachbarten Streifens zu erteilen. Der Lernende könnte damit wählen, ob er an bestimmten Stellen des didaktisch leitenden Streifens zur der Verzweigung eines didaktisch untergeordneten, zweiten Streifens übergehen möchte oder doch lieber im Hauptstreifen weiterlernen möchte.

Durch die Nutzung dieser Varianten sind verschiedene, zusätzliche didaktische Effekte realisierbar. Als weitere erfindungsgemäße vorteilhafte Variante ist denkbar, dass das Gehäuse nur eine einzige ebene Fläche aufweist und alle anderen Seitenflächen gewölbt sind wodurch erreicht wird, dass der Leselernwickler nur auf dieser Fläche zur Benutzung auf einen Tisch gestellt werden kann. Dadurch ergibt sich eine eindeutige Position mit der verbindlichen Definition einer Unterseite. In dieser Variante ist es denkbar, dass bei den Rollen auf die gegenständliche Ausprägung der Drehachse verzichtet wird und stattdessen zur Lagerung jeder Rolle zwei kleinere Hilfsrollen vorhanden sind, deren Achsen parallel zu den in diesem Fall fiktiven Drehachsen der Rollen verlaufen und deren Abstand zueinander so gering ist, dass die Rolle nicht zwischen den Hilfsrollen hindurch fällt und deren Abstand zueinander groß genug ist, dass die Rolle nicht seitlich von den Hilfsrollen herunter fällt. In dieser Konfiguration wird die Rolle durch die beiden Hilfsrollen zwangsweise in der Mitte justiert, wodurch sich der Vorgang des Einlegens einer neuen Rolle sehr stark vereinfacht. Insbesondere für körperlich behinderte Lernende ist eine solche Eigenschaft von Vorteil.

Wenn in einer weiteren Ausführungsform die Drehachsen der Rollen geneigt zur Grundfläche des Gehäuses angeordnet sind, kann das Gehäuse so gestaltet werden, dass die sichtbare Fläche des Streifens wie bei einem Schreibpult gegenüber der Grundfläche geneigt ist und in einer für das Arbeiten am Tisch ergonomisch günstigen Winkelposition vom Lernenden ablesbar ist.

Wie bereits mehrfach erwähnt, ergeben sich interessante Nutzungsvarianten daraus, dass ein Leselernwickler mit mehr als einem Streifen bestückbar ist, dabei bietet sich als erstes an, dass die sichtbaren Bereiche der Streifen parallel zueinander angeordnet sind und etwa gleiche Länge haben. Es ist jedoch durchaus denkbar, dass ein sehr lang gestalteter, sichtbarer Bereich mit einem nur kurzen Sichtbereich eines zweiten Streifens kombiniert wird. Ein ganz entscheidender, prinzipieller Vorteil eines erfindungsgemäßen Leselernwicklers mit wenigstens zwei Streifen besteht darin, dass sich die Streifen kreuzen können, und sich dadurch im Kreuzungspunkt überlappen. Mit dieser Konfiguration wird ein für bisherige, rein mechanische Lerngeräte nicht ohne weiteres erreichbarer Effekt möglich, nämlich das Ergänzen einer ersten Information auf dem ersten Streifen durch eine zweite Information auf dem zweiten Streifen.

Dafür ist es denkbar, dass der nach vorne orientierte Streifen Öffnungen oder Sichtfenster aufweist. Wenn diese im Kreuzungspunkt stehen geben sie den zweiten Streifen frei, jedoch nur innerhalb des durch das Fenster oder die Öffnung begrenzten Bereiches. Denkbar ist, dass auf diese Weise ein auf dem ersten Streifen nicht ganz vollständiges Wort durch Buchstaben vom zweiten Streifen ergänzt wird. Oder der erste Streifen enthält nur einen Teil einer Grafik; für den restlichen Teil der Grafik ist ein Sichtfenster vorgegeben, welches eine bestimmte Silhouette vorgibt, jedoch nicht den Inhalt dieser Fläche. Der Lernende muss jetzt von dem zweiten Band diejenigen Grafiken auswählen, welche von ihrer Form her in das vorgegebene Sichtfenster passen (Lernschritt 1) und dann von den passenden Grafiken die jenige wählen, die von der Bedeutung her zu der bereits ausgewählten Grafik des ersten Streifens passt (Lernschritt 2).

In allen bisher geschilderten Varianten ist es erforderlich, dass der Lernende zumindest die Rolle, auf welche aufgewickelt wird, von außen weiterdrehen kann. Dazu ist entweder ein scheibenförmiger Bereich der Rollen, der aus Schlitzen in der Gehäusewand herausragt, anwendbar oder eine Kurbel, die auf der Achse der Rollen angeordnet ist.

Bei einer Betätigung durch eine Kurbel bietet es sich an, den effektiven Wirkungsradius der Kurbel veränderbar zu gestalten, indem an der Achse der Rollen radial eine Fläche angeordnet wird, welche einen Schlitz enthält. In diesem Schlitz kann der Betätigungsteil der Kurbel radial verschoben werden. Falls ein schnelles Weiterdrehen gewünscht wird, kann dazu der Betätigungsteil der Kurbel im Schlitz möglichst nahe an die Drehachse herangeschoben werden. Bei einer gleich bleibenden, tangential gerichteten Geschwindigkeit des Kurbelbetätigungsteiles steigt dadurch die Drehzahl der Rolle an. Dem entsprechend sinkt die Rollendrehzahl ab, wenn der Kurbelbetätigungsteil im Schlitz auf den größt möglichen Radius verschoben wird.

Im Folgenden sollen weitere Einzelheiten und Merkmale der Erfindungen anhand von Beispielen näher erläutert werden. Diese sollen die Erfindung jedoch nicht einschränken, sondern nur erläutern. Es zeigt in schematischer Darstellung:
- Figur 1: Dreidimensionale Ansicht eines Leselernwicklers mit Sichtfenster
- Figur 2: horizontaler Schnitt durch einen Leselernwickler mit außen am Gehäuse verlaufendem Streifen

- Figur 3: horizontaler Schnitt ähnlich Figur 3, jedoch mit anderer Führung des Streifens
- Figur 4: vertikaler Schnitt durch den in Figur 3 gezeigten Leselernwickler

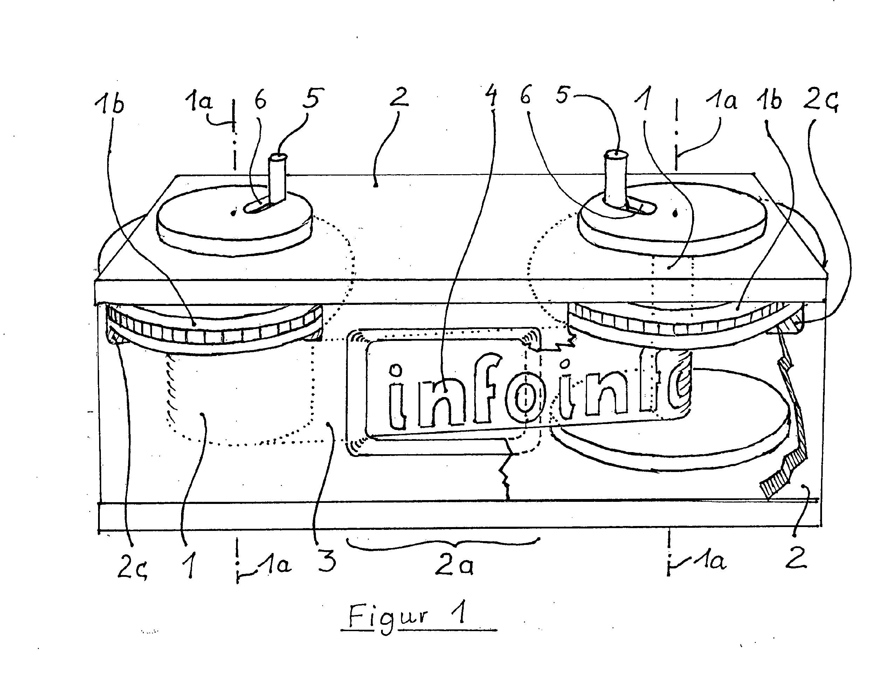

In Figur 1 ist in Fluchtpunktperspektive ein kastenförmiger Leselernwickler gezeichnet, im rechten Bereich ist das Gehäuse 1 aufgebrochen dargestellt. Es gibt den Blick auf eine Rolle 1 frei. Auf diese Rolle wird ein Streifen 3 aufgewickelt, welcher als zu erlernende Information 4 in dem dargestellten Beispiel die Buchstaben "infoinfo" enthält. Der Streifen 3 wird von der gestrichelt dargestellten Rolle 1 abgewickelt. Zu erkennen ist, wie beide Rollen mit einem scheibenförmigen Bereich 1 b versehen sind, welcher durch Schlitze 2 c in der Vorderfront und an den Seiten des Gehäuses 2 herausragt und zugänglich ist. Über diese scheibenförmigen Bereiche können die Rollen in Drehung versetzt werden. Alternativ ist in Figur 1 für jede Rolle auch eine Kurbel 5 angeordnet. Zu erkennen ist wie, der Betätigungsteil der Kurbel 5 in Schlitzen 6 radial zur Drehachse 1 a verschieblich ist.

Die in Figur 1 dargestellte Variante eines Leselernwicklers ist mit einer Öffnung 2 a im Gehäuse 2 versehen, durch den der Streifen 3 sichtbar wird. In Figur 1 ist nachvollziehbar, dass diese Öffnung etwas größer sein muss, als der Streifen breit ist, damit verschiedene Betrachtungswinkel in Bezug auf die Gerätegrundfläche möglich sind.

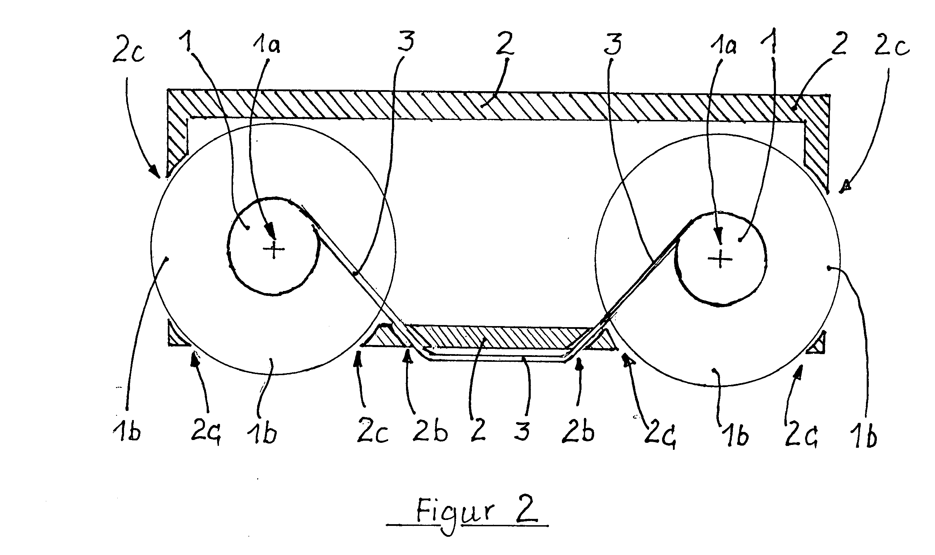

In Figur 2 ist der horizontale Schnitt durch einen Leselernwickler gezeigt, bei dem der Streifen 3 durch zwei Schlitze 2 b verläuft. Nachvollziehbar ist, dass in den Schlitzen und hinter dem von außen sichtbaren Bereich des Streifens 3 erhöhte Reibung auftrifft. Diese Reibung kann je nach der Auslegung des Gerätes erwünscht oder nachteilig sein.

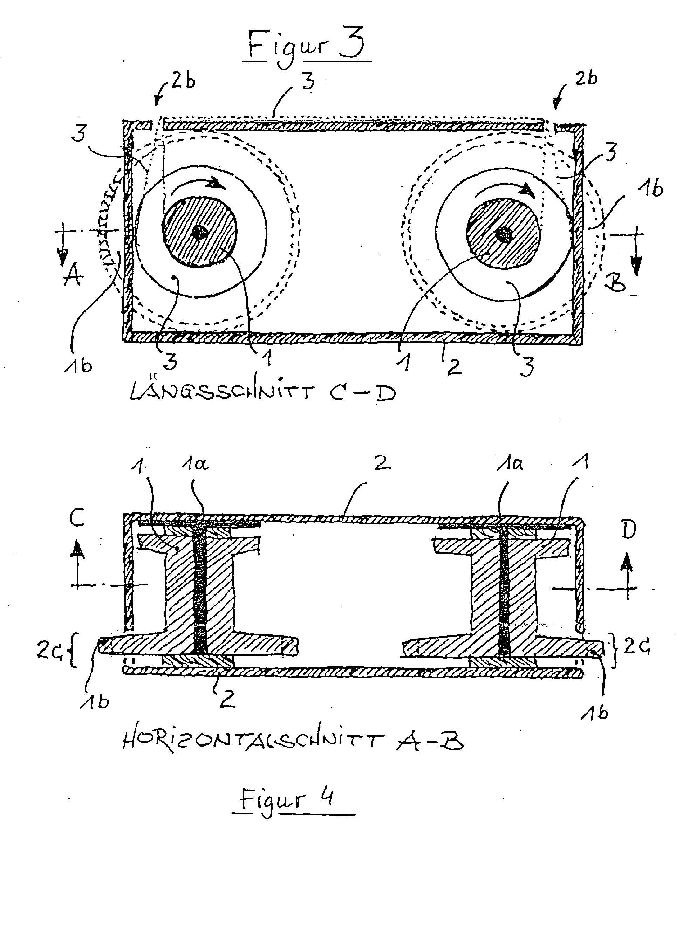

In Figur 3 ist ein horizontaler Schnitt durch einen anderen Leselernwickler gezeichnet. Im Unterschied zu Figur 2 ist die Drehrichtung der Rollen 1 in Bezug auf die Richtung der Bewegung des Streifens 3 außen am Gehäuse invertiert.
Ein Unterschied zu der in Figur 1 und Figur 2 dargestellten Ausführungsform ist, dass hier der scheibenförmige Bereich 1 b jeder Rolle 1 nur durch einen einzigen Schlitz 2c nach außen ragt.

Figur 4 zeigt einen vertikalen Querschnitt durch den in Figur 3 dargestellten Leselernwickler. Im Unterschied zu der in Figur 1 dargestellten Ausführungsform ist der scheibenförmige Bereich 1b, der aus dem Gehäuse 2 herausragt, in Figur 4 an der unteren Seite des Gehäuses 2 angeordnet.

### Bezugszeichenliste

- 1: Rollen, zum Auf- oder Abrollen des Streifens 3
- 1a: Drehachsen der Rollen 1
- 1b: scheibenförmiger Bereich der Rollen 1, ragt aus Schlitzen 2c heraus
- 2: Gehäuse, darin sind Rollen 1 drehbar gelagert
- 2a: Öffnung, lässt im Gehäuse 2 den Streifen 3 sichtbar werden.
- 2b: Schlitz, im Gehäuse 2 zum Aus- b.z.w. Eintritt des Streifen 3
- 2c: Schlitz, für scheibenförmigen Bereich 1 b der Rolle 1
- 3: Streifen, auf einer Rolle 1 aufgewickelt
- 4: Information, die zu erlernen ist,
auf Streifen 3 grafisch aufgebracht.
- 5: Kurbel, auf den Drehachsen 1 a außerhalb des Gehäuses 2 angeordnet.
- 6: Schlitz zum Verschieben des Betätigungselementes der Kurbel 5.

## Patentansprüche

1. Leselernwickler, bestehend aus
- einem Gehäuse 2, in welchem
- Rollen 1 drehbar gelagert sind und
- einem Streifen 3 mit darauf aufgebrachten Lerninformationen 4,
- welcher zu einem Teil an der Außenseite des Gehäuses 2 sichtbar ist und
- durch Drehung der Rollen 1 verschiebbar ist
**dadurch gekennzeichnet, dass**
- je ein Paar der Rollen 1 bevorzugt parallel und gegenüberstehend angeordnet ist
- und auf der einen Rolle 1 der Streifen 3 aufgewickelt ist, der davon abwickelbar und auf die andere Rolle 1 aufwickelbar ist, wobei entweder
- der zwischen den beiden Rollen 1 verlaufende Bereich des Streifens 3 durch eine Öffnung 2a im Gehäuse 2 sichtbar ist
- oder der Streifen 3 durch zwei Schlitze 2b aus dem Gehäuse aus- und wieder eintritt, welche bevorzugt zu den Drehachsen 1 a der Rollen 1 parallel ausgerichtet sind,
- und auf den Drehachsen 1a je eine Kurbel 5 außerhalb des Gehäuses 2 angeordnet ist und/oder
- ein scheibenförmiger Bereich 1b der Rollen 1 teilweise durch wenigstens je einen Schlitz 2c aus dem Gehäuse 2 herausragt,
wobei jeder Schlitz 2c senkrecht zu den Drehachsen 1a ausgerichtet ist und/oder
- ein Antrieb 6 auf der Drehachse 1a der aufwickelnden Rolle 1 an geordnet ist

2. Leselernwickler nach Anspruch 1 **dadurch gekennzeichnet, dass** auf beiden Seiten des Streifens 3 zu erlernende Informationen 4 aufgebracht sind

3. Leselernwickler nach einem der vorhergehenden Ansprüche **dadurch gekennzeichnet, dass** die Rollen 1 herausnehmbar sind.

4. Leselernwickler nach Anspruch 1 **dadurch gekennzeichnet, dass** der sichtbare Bereich des Streifens 3 hinterleuchtet ist, wobei der Streifen 3 aus wenigstens teilweise transparentem Material besteht.

5. Leselernwickler nach einem der vorhergehenden Ansprüche **dadurch gekennzeichnet, dass** auf den Rollen 1 ein Haken angeordnet ist, welcher in eine dazu komplementäre Öffnung im Streifen 3 eingreift.

6. Leselernwickler nach einem der vorhergehenden Ansprüche **dadurch gekennzeichnet, dass** auf den Rollen 1 ein Hakenband befestigt ist, welches mit einem Flauschband auf dem Streifen 3 einen Klettverschluss bildet.

7. Leselernwickler nach einem der vorhergehenden Ansprüche **dadurch gekennzeichnet, dass** auf wenigstens einer Rollen 1 eine Papprolle lösbar aufgesteckt ist, auf welcher ein kurzes Stück des Streifens 3 aufgeklebt ist und der übrige Teil des Streifens 3 aufgewickelt ist.

8. Leselernwickler nach Anspruch 1 **dadurch gekennzeichnet, dass** an den aufeinander zuweisenden Kanten der Schlitze 2 b Umlenkrollen angeordnet sind, deren Drehachsen parallel zu den Drehachsen der Rollen 1 ausgerichtet sind.

9. Leselernwickler nach einem der vorhergehenden Ansprüche **dadurch gekennzeichnet, dass** in den Streifen 3 Öffnungen eingebracht sind.

10. Leselernwickler nach Anspruch 9, **dadurch gekennzeichnet, dass** mittels der Öffnungen z.B. ein durch Federkraft belasteter Stift oder ein elektrischer Kontakt freigebbar ist, durch welchen zusätzliche Funktionen auslösbar sind.

11. Leselernwickler nach Anspruch 9, **dadurch gekennzeichnet, dass** durch die Öffnungen im Streifen 3 hindurch ein auslösendes Element für eine zusätzliche Funktion erreichbar ist

12. Leselernwickler nach den Ansprüchen 9 bis 11, **dadurch gekennzeichnet, dass** als zusätzliche Funktion
- eine Lichtquelle und/oder
- eine Geräuschquelle und/oder
- eine Sperre oder eine Freigabe eines weiteren Rollenpaares
und/oder
- der Zugang zu einem Ablagefach im Gehäuse
aktivierbar sind.

13. Leselernwickler nach einem der vorhergehenden Ansprüche **dadurch gekennzeichnet, dass**
- das Gehäuse nur eine einzige ebene Seitenfläche aufweist,
- die Drehachsen 1a der Rollen 1 parallel zu dieser Ebene angeordnet sind und
- jede Rolle auf jeweils zwei kleineren Rollen gelagert ist.

14. Leselernwickler nach einem der vorhergehenden Ansprüche **dadurch gekennzeichnet, dass** die Drehachsen 1a der Rollen 1 geneigt zur Grundfläche des Gehäuses 2 angeordnet sind.

15. Leselernwickler nach einem der vorhergehenden Ansprüche **dadurch gekennzeichnet, dass** er mit mehreren Paaren Rollen 1 und entsprechender Anzahl von Streifen 3 bestückt ist, wobei der sichtbare Bereich aller Streifen 3 etwa in der gleichen Ebene und etwa parallel zueinander angeordnet ist.

16. Leselernwickler nach Anspruch 15 **dadurch gekennzeichnet, dass** sich wenigstens zwei sichtbare Bereiche der Streifen 3 kreuzen, wobei die sich kreuzenden Streifen bis auf den innersten Streifen aus wenigstens halbtransparentem Material gefertigt sind oder Öffnungen aufweisen

17. Leselernwickler nach einem der vorhergehenden Ansprüche **dadurch gekennzeichnet, dass** der Arm der Kurbel 5 in einem radial zur Drehachse 1a ausgerichteten Schlitz verschiebbar ist.

18. Leselernwickler nach einem der vorhergehenden Ansprüche **dadurch gekennzeichnet, dass** bei einem Paar Rollen 1 die Drehachse 1 a nur einer Rolle 1 an einem Ende schwenkbar gelagert ist und das andere Ende der Drehachse 1 a auf einer Mutter befestigt ist, welche durch eine radial zur Drehachse 1a und parallel zur Verbindungslinie zwischen den Drehachsen 1a des Rollenpaares ausgerichtete Schraube verschiebbar ist.

19. Leselernwickler nach einem der vorhergehenden Ansprüche **dadurch gekennzeichnet, dass** der Antrieb
- elektrisch oder
- pneumatisch oder
- hydraulisch und/oder
- mit Seilzügen, Ketten und/oder Zahnriemen
aufgebaut ist.

20. Leselernwickler nach einem der vorhergehenden Ansprüche **dadurch gekennzeichnet, dass** als Antrieb eine tangential in ein Zahnrad auf einer Drehachse 1 a einklinkbare, linear verschiebbare , stirnseitig von der Außenseite des Gehäuses 2 erreichbare Schubstange vorhanden ist, welche durch eine Feder zur Gehäuseaußenseite drückbar ist.
